# EUROPEAN PATENT SPECIFICATION

(11) **EP 1 268 923 B1**
(45) Date of publication and mention of the grant of the patent: **25.08.2004**
(21) Application number: 01900212.0
(22) Date of filing: 17.01.2001
(51) Int. Cl.: D21C 5/02, D21C 9/08, D21H 21/02

(54) **PROCESS FOR REDUCING STICKY CONTAMINANTS IN STOCK SYSTEMS CONTAINING WASTE PAPER AND IN COATED BROKE**
VERFAHREN ZUR VERMINDERUNG KLEBRIGER VERUNREINIGUNGEN IN ALTPAPIER UND PAPIERRÜCKSTOFF ENTHALTENDEM PAPIERBREI
PROCEDE DE REDUCTION DES CONTAMINANTS COLLANTS DANS DES SYSTEMES DE PATE A PAPIER CONTENANT DES DECHETS DE PAPIER ET SOUS FORME DE REJETS ENDUITS

(30) Priority: 19.01.2000 CH 20000099
(43) Date of publication of application: 02.01.2003
(73) Proprietor: Clariant Finance (BVI) Limited, Road Town, Tortola (VG)
(72) Inventor: KOHLER, Achim, 74074 Heilbronn (DE); HENTZSCHEL, Peter, 61440 Oberursel (DE); REINHARDT, Bernd, 49082 Osnabrück (DE)
(74) Representative: Kachholz, Traudel
(86) International application number: PCT/IB2001/000034
(87) International publication number: WO 2001/053601

(56) References cited:
- EP-A- 0 542 215
- WO-A-93/13265
- REINHARDT, B. ET AL: "Adsorption on Bentonite of Hydrocolloids from Specialty Paper Broke;Laboratory and Mill Experience" WOCHENBLATT FÜR PAPIERFABRIKATION , vol. 125, no. 4, 28 February 1997 (1997-02-28), pages 148-152, XP000989796 cited in the application
- DATABASE PAPERCHEM [Online] THE INSTITUTE OF PAPER SCIENCE AND TECHNOLOGY, ATLANTA, GA, US; PEPELNJAK, G.: "Effect of Adding Auxiliary Agents on the Stickies Content of Waste-Paper Stock" retrieved from DIALOG XP002162264 & PAPIR 15, NO. 2: 136-142 (JULY 1987). [SLOVENIAN;CROAT. & ENGL. SUM.],

## Description

The invention relates to a process for reducing sticky contaminants in stock systems containing waste paper and in coated broke, and their reuse in the manufacture of papers.

It is prior art to return paper waste from natural fibrous materials for economically expedient reuse. For this purpose, mechanical and chemical processes are often usually used together for dispersion, removing printing ink (de-inking), bleaching, cleaning (washing) and screening.

As a result of the increased input of mixed waste paper as a source of raw material in papermaking, large quantities of solid or water-soluble, sticky constituents are also carried into the paper machine circuits. They constitute a significant cause of so-called "stickies" and "white pitch" which, because of their hydrophobic properties, are often deposited on hot and moving parts and in the wires and felts of paper machines and can therefore lead to paper web breaks.

"stickies" is understood to mean sticky deposits in the form of organic complexes, which are formed from the waste paper by the agglomeration of disruptive materials which interact with one another. All sticky deposits which are introduced exclusively via the raw materials are referred to as "primary stickies". If, on the other hand, the formation of the sticky contaminants is brought about only after reaction with additives, then these deposits are referred to as "secondary stickies". The main source for sticky contaminants are adhesives from paper conversion, but also synthetic binders from paper finishing.

"white pitch" is a special case of "sticky" formation, which is associated with the use of polyvinyl acetate and styrene butadiene latices, for example from coated paper broke (Das Papier (1998) 10 A, V 36 -V 41; Wochenblatt für Papierfabrikation (1990) 8, 310-313).

The aforementioned "stickies" and "white pitch" are to be viewed as disruptive materials in papermaking, which as far as possible have to be "neutralized" in terms of their stickiness or separated.

In order to ensure effective treatment of disruptive materials, the size distribution of the disruptive materials to be encountered is critical for the thermal, chemical and/or mechanical processes to be used.

A rough distinction is drawn between macrostickies for particle sizes above 150 µm, which can largely be removed from the stock circulation by means of the aforementioned separating processes, and microstickies made of sticky contaminants between 1 µm and 150 µm.

In most cases, microstickies do not cause any problems in papermaking if they do not agglomerate. In addition, they are then below the visibility limit.
In order to prevent re-agglomeration of the microstickies to a large extent, various processes are known for the chemical modification of the stickies remaining in the stock stream and their absorption on carrier materials with a high specific surface and on the fibrous material.

Here, the following procedures have been tried and tested in practice, but lead only to partial success.

### 1. Dispersion with the aim of changing the charging of the stickies by means of anionic and non-ionic dispersants

By this means, colloidal, charged particles are formed which counteract agglomeration and deposition. The wetting properties of the dispersant are very important in this case, since the "stickies" are generally hydrophobic.

### 2. Reducing the tackiness of the stickies by

- Fixing the highly anionic disruptive materials by means of highly cationic fixing agents (forming so-called polyelectrolyte complexes; the reaction product is then attracted to the anionic fibre),
- Absorption on synthetic fibres, pigments with a high specific surface (e.g. talc, modified clay, mica, smectite, bentonite), often with subsequent flocculation by means of polymers to bind together separable macroflocs,
- Covering (masking) with non-ionogenic hydrophilic polymers or anionic zirconium compounds, in particular of zirconium acetate and ammonium zirconium carbonate.

Known highly cationic fixing agents are polyethylene imine (PEI), polydiallyldimethylammonium chloride (PDADMAC), polyvinyl amine (PVAm), polyaluminium chloride (PAC), polyacrylamide (PAAM) and so on. The range of action of fixing agents extends, depending on the type and modification of the chemicals used, from about 1 nm to 50 µm particle size of the microstickies (Das Papier (1998) 10 A, V 36 -V 41).

Solids with a low surface energy exhibit a hydrophobic behaviour and therefore have a high affinity with hydrophobic substances, such as stickies. These absorption agents also include, amongst others, the synthetic fibres polyester, polyamide and polypropylene.

Further adsorption agents used are primarily various types of talc with a specific surface modification and grain size distribution which, because of their hydrophobic and organophilic surface, are capable of depositing on sticky constituents and carrying them out with the paper. Adhesive particles encapsulated in this way show a lower tendency to deposition on hot machine parts. Combating sticky deposits by means of talc has some drawbacks, however. For example, the system is very sensitive to shear. In addition, talc is difficult to retain and often leads to blinding of the felts. Talc can have a detrimental effect on resin sizing and stabilizes foam.

For partial overflocking, highly concentrated flocking agents, such as aluminium sulphate, aluminate, acids and so on, are used.

Known masking agents for stickies are, amongst others, ethoxilated nonylphenols and ethoxilated dodecylphenols having at least 9 mol ethylene oxide, whose use is limited to dosage rates of 10 ppm because of an extreme tendency to foaming (Wochenblatt für Papierfabrikation (1990) 8, 310 - 313).

In addition, graft copolymers of polyalkylene oxide and partially saponified vinylacetate (up to 15% saponification) with a weight ratio of 1:0.2 to 1:10, are used as masking agents, if appropriate in combination with other papermaking aids, it being possible for the polyalkylene oxide to be polyethylene, polypropylene or polybutylene oxide (EP 0571144 Al).

Likewise, alkoxylation products, which are obtained by reacting alkylene oxides with C₁₀₋₂₂ carbonic acid derivatives and/or C₁₀₋₂₂ carbonic acids, act as masking agents (DE 195 15 273 Al).

A hydrophilic polymer based on vinyl alcohol, which contains some hydrophobic groups such as acetates, propionates, butyrates or oleates and has molecular weights from 2 000 to 125 000 or more (EP 0220001 B1), is used under the commercial name BETZ DETAC® (trademark of the BETZ company) to combat the stickiness of hydrophobic stickies by means of covering them with a hydrophilic film over a wide pH and temperature range. This partially saponified polyvinyl alcohol (PVAL) is usually metered in the thick stock area, in order to ensure an adequate reaction time of 20 - 30 min with the stock to be treated, given good and thorough mixing. The necessary dosage rates to combat stickies successfully depend on the type and quantity of the waste paper used.
Any influence by other aids is ruled out because of their non-ionic charge (Wochenblatt für Papierfabrikation (1990) 8, 310-313).
An excess of PVAL would have an extremely detrimental effect on the papermaking process and on effluent loading, since it is not needed to cover the sharply varying proportion of stickies, depending on the selected dispersion conditions (shear intensity, pH and temperature range, combination of aids).
The formation of foam and an increase in the disruptive materials carried by the waste water (COD and BOD content) result. An additional difficulty is the poor biodegradability of PVAL.

On the other hand, underdosing with PVAL would lead to inadequate masking of all the sticky constituents.

In relation to the pulping of separated base paper broke, the selective adsorption capability of alkali modified bentonites with respect to various water-soluble polymers, in particular with respect to PVAL, in effluent has been demonstrated (Wochenblatt für Papierfabrikation (1996) 4, 148-152).

Accordingly, 130 mg of dissolved PVAL is bound by 1 g of bentonite (ratio about 1:7.5).
Practical investigations on effluent with different disruptive material loadings and types ultimately led to the result that, in practice, for safety reasons, eight to nine times the quantity of bentonite, based on the water-soluble PVAL proportion in the effluent, is used. As a result, at least 90 % of the dissolved PVAL from the effluent could be absorped and carried out with the paper. As a result of the combined use of bentonite and cationic fixing agent, such as PAC and PEI, in the preparation of broke, the content of dissolved hydrocolloids in the effluent could be reduced still further.

This beneficial action of a combined use of alkali modified bentonite and cationic fixing agent for the absorption of PVAL dissolved in the effluent has until now been practised only in the pulping of separated base paper broke surface-sized with PVAL and CMC.

A use of the aforementioned combination in the dispersion of waste paper and coated broke, in which partially saponified polyvinyl alcohol is added as a masking agent for microstickies, appears to be ruled out, since a very wide range of disruptive material loadings and a multiplicity of sticky constituents of varied chemical composition would lead to uncontrolled interactions.
The object of the invention was, therefore, to use the positive properties of partially saponified polyvinyl alcohols as a chemical agent for masking sticky constituents (microstickies) more effectively, from a process engineering point of view, for papermaking which will be less susceptible to disruption and more environmentally friendly with respect to protecting water supplies.

Surprisingly, the expected disruptive interactions could largely be avoided by selecting the correct dosing sequence of the individual components and the correct dosing location, depending on application.

For this purpose, it was necessary first of all for partially saponified PVAL to be introduced in a certain excess at that point in the process of preparing waste paper and coated broke where either macrostickies had already been removed by known separation processes and only microstickies were predominantly still present in the stock system, or even no macrostickies could still be formed.

The point of addition for masking sticky microstickies can therefore be located in the thick stock and also in the thin stock area, depending on the selected preparation and separation technique.

What is claimed is a process for reducing sticky contaminants, in particular those with a finely divided composition (microstickies) in the preparation of stock systems containing waste paper and of coated broke, characterized in that, after mechanical preparation has been carried out and, if necessary, coarse sticky constituents (macrostickies) have been separated, the stock system has added to it at least one water-soluble organic polyol, in particular a water-soluble polyvinyl alcohol or a mixture of various water-soluble organic polyols, in particular a mixture of various water-soluble polyvinyl alcohols, and bentonite and, if appropriate, further chemical additives and fillers.

The organic polyvinyl alcohols used are water-soluble polymers with proportions of vinyl alcohol or a copolymer of vinyl alcohol and vinyl acetate, which contain hydrophobic groups and are hydrolyzed to more than 70% by weight.
The organic polyvinyl alcohols are used after the mechanical preparation in proportions from 0.05 to 2% by weight, in particular from 0.1 to 1.0% by weight, based on fibrous material, in combination with bentonites with a high specific surface, preferably alkali modified bentonites, in proportions from 1 to 10% by weight, based on fibrous material.

The organic polyvinyl alcohols used have a molecular weight from 1 000 to 250 000, preferably 90 000 to 150 000.

The polyol may also be a water-soluble organic copolymer which contains repeating units of vinyl alcohol and of non-ionic hydrophilic monomers, ionic hydrophilic monomers and/or hydrophobic monomers, the water-soluble organic copolymers comprising at least 20 mol% vinyl alcohol.
Examples of hydrophobic monomers are vinyl acetate, propylene oxide, methacrylate, methylethacrylate, octadecylacrylate, n-octadecylacrylamide, styrene, allyl stearate, vinyl stearate, ethene, propene, n-butene, isobutene, pentene, dodecene, octadecene and vinyl ether higher than methyl.

Examples of non-ionic hydrophilic monomers are vinyl pyrrolidone, ethylene oxide and acrylamide.

The copolymer can have random distribution of the monomer units or various degrees of block formations and/or alternations in the polymer.
Block formation means that in the copolymer there are regions which are formed by only one of the monomers, while in the case of alternation, a monomer of one sort is always bound to a monomer of the other sort.

The polyvinyl alcohols may also be modified, for example by cationic groups.

In a preferred process, the prepared stock mixture also has added to it cationic fixing agents in proportions from 0.05 to 1% by weight (commercially available), based on fibrous material.

In a likewise preferred process, further conventional chemical additives (such as, inter alia, dry strengthening agents, wet strengthening agents and sizing agents) and fillers (inter alia, clay, calcium carbonate and talc) are mixed in.

What is also claimed is paper which is produced by means of a secondary fibrous material mixture prepared in accordance with the process of the invention.

The process according to the invention, comprising a combination of partially saponified polyvinyl alcohol, alkali modified bentonite and cationic fixing agents, is explained by the following exemplary embodiments:

### Exemplary embodiment 1

By means of a high-speed laboratory stirrer (10 000 rev/min) small cut paper pieces of constant fibrous composition and with an addition of different contact adhesives of about 10% was disintegrated at a consistency of 4% for a period of 5 min until it was free of specks (microstickies below the visibility limit of about 150 µm).

The stock mixture prepared in this way then had added to it, in a different sequence, various hydrophilicization agents, in particular partially saponified polyvinyl alcohols as masking agents, pigments with a high specific surface, in particular bentonites, as adsorption agents, and various cationic fixing agents of different chemical composition. The amount added was 1% by weight (commercially available) in the case of fixing and masking agents and, respectively, 5% by weight (solids) in the case of adsorption agents, based on fibrous material.

Following each addition of one of the abovementioned products, attention is paid to adequate thorough mixing before any possible addition of a further product. Following the addition of partially saponified polyvinyl alcohols, attention is paid to an action time of 30 min in accordance with the recommendation of the chemical suppliers before a further product is added to the stock mixture.

The preparation conditions, such as pH and temperature, can be varied over a wide range.

Then, laboratory sheets are formed in accordance with the ZELLCHEMING standard method and dried, and in addition filtrates from the stock samples are taken in order to determine the chemical oxygen demand (COD).

Since to date no method of determining microstickies below 150 µm in stock systems exists, recourse must be made to COD determination, although this permits only a statement about the trend towards sticky loading (Wochenblatt für Papierfabrikation (1997) 9, 468-477).

Therefore, composite materials from the formed, moist paper sheets are additionally prepared together with aluminium foil by being compressed with one another within 30 seconds in a hot press at 20 bar pressure and 130°C and later, following cooling and intermediate storage under standard conditions (24 h at 23°C/50% relative humidity), the forces needed to separate the two layers, approximating to the FINAT method, can be determined. The higher the separation force, the higher is the residual stickiness of the microstickies. In addition, the stickiness of any residues adhering to the laboratory stirrer, and their elimination by means of a powerful water jet, are assessed.

The results of some laboratory trials are presented in Tables 1 to 6. The results were deliberately selected at a dispersion temperature of 60°C, since partially saponified polyvinyl alcohols are only effective as a masking agent above 100°F (38°C).

If, for example, the additives already mentioned are added as individual components to a fibrous stock mixture with an addition of 10% adhesive of different composition, then in general a decrease in the stickiness of the microstickies is found on the basis of the separation force measurements (Tables 1, 3 and 5). In this case, fixing agents can be just as effective as adsorption or hydrophilicization agents (masking agents).

However, as expected, talc is generally less beneficial in its effect than bentonite as an adsorption agent (Tables 1 and 3).
On the other hand, hydrophilicization agents based on partially saponified polyvinyl alcohols belong in the group of additives which bring about the lowest reduction in the COD value in the filtrate, and to some extent even increase it. In this case, the degree of saponification and further properties of the polyvinyl alcohols used, such as molecular weight, viscosity and so on, appear to play a part (Tables 1 and 5).

This points to the fact that polyvinyl alcohol is no longer deposited on the microstickies but also strays into the effluent in dissolved form.

A remedy is provided only by the combination of partially saponified polyvinyl alcohol and alkali modified bentonite (Table 2, Variant A3 + B2). A fixing agent which is additionally used can, if necessary, reduce the COD value still further (Table 2, Variant A3 + B2 + A1), but in the least favourable case, can also make the separation force and COD values worse again (Table 2, Variant A3 + B2 + B1). From this it is possible to derive the fact that, depending on the stock and adhesive system used, the optimum fixing agent in this combination of additives has to be found.
Using the combination according to the invention of polyvinyl alcohol/bentonite (Table 2, Variant A3 + B2), it is clear that the best results with respect to the reduction of the stickiness of microstickies can be achieved. If, on the other hand, the adsorption agent bentonite (B2) is replaced by talc (A2), then this combination (polyvinyl alcohol A3 + talc A2) is less effective by far if the separation force values are used as a basis (Table 2), or even disadvantageous in the case of a different adhesive addition (rubber instead of acrylate adhesive, Table 6).

Combinations of adsorption agents (talc or bentonite) with fixing agents were likewise not very effective with respect to reducing the separation force (Table 4).

### Exemplary embodiment 2

A broke paper had about 5% (solids) of an acrylate contact adhesive added to it, and this stock mixture was well and thoroughly mixed under practical conditions in a technical centre pulper for a period of about 45 min at a moderate consistency of 6% and a temperature of about 60°C. The pH of the stock mixture was adjusted to about 6.

In the order specified, the following were then added to the stock mixture as additives:
1. partially saponified polyvinyl alcohol (1%)
2. alkali modified bentonite (2.5% solids)
3. cationic fixing agent (0.6%)
in each case a mixing period of 30 min (in the case of polyvinyl alcohol) and, respectively 10 min being maintained before the addition of the next component.

The COD content of originally about 320 mg O₂/l in the filtrate was reduced to below 150 mg O₂/l by means of this combination.
Residual stickiness of the microstickies in the formed paper sheet, which could be demonstrated by dyeing with a special blue dye, could no longer be demonstrated by means of separation force measurement (initial value of the sample without additives was more than 5 N).

This therefore confirms the positive results of the combination of partially saponified polyvinyl alcohol/bentonite/cationic fixing agent from the laboratory trial (Exemplary embodiment 1).

This stock mixture, thus treated in accordance with the invention, was used to produce new paper without any disruptive deposits in the paper machine system (machine part, water circulation).

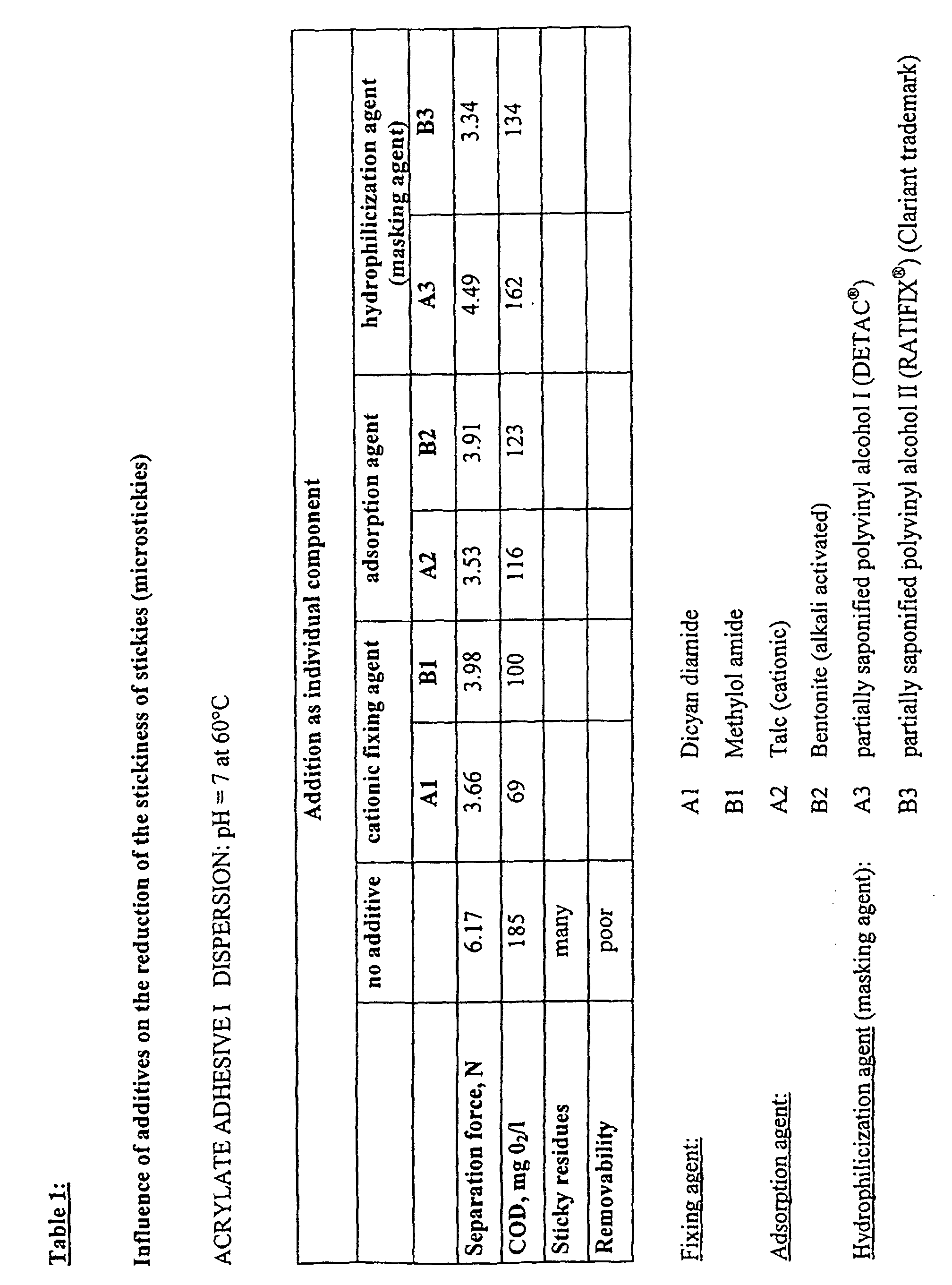

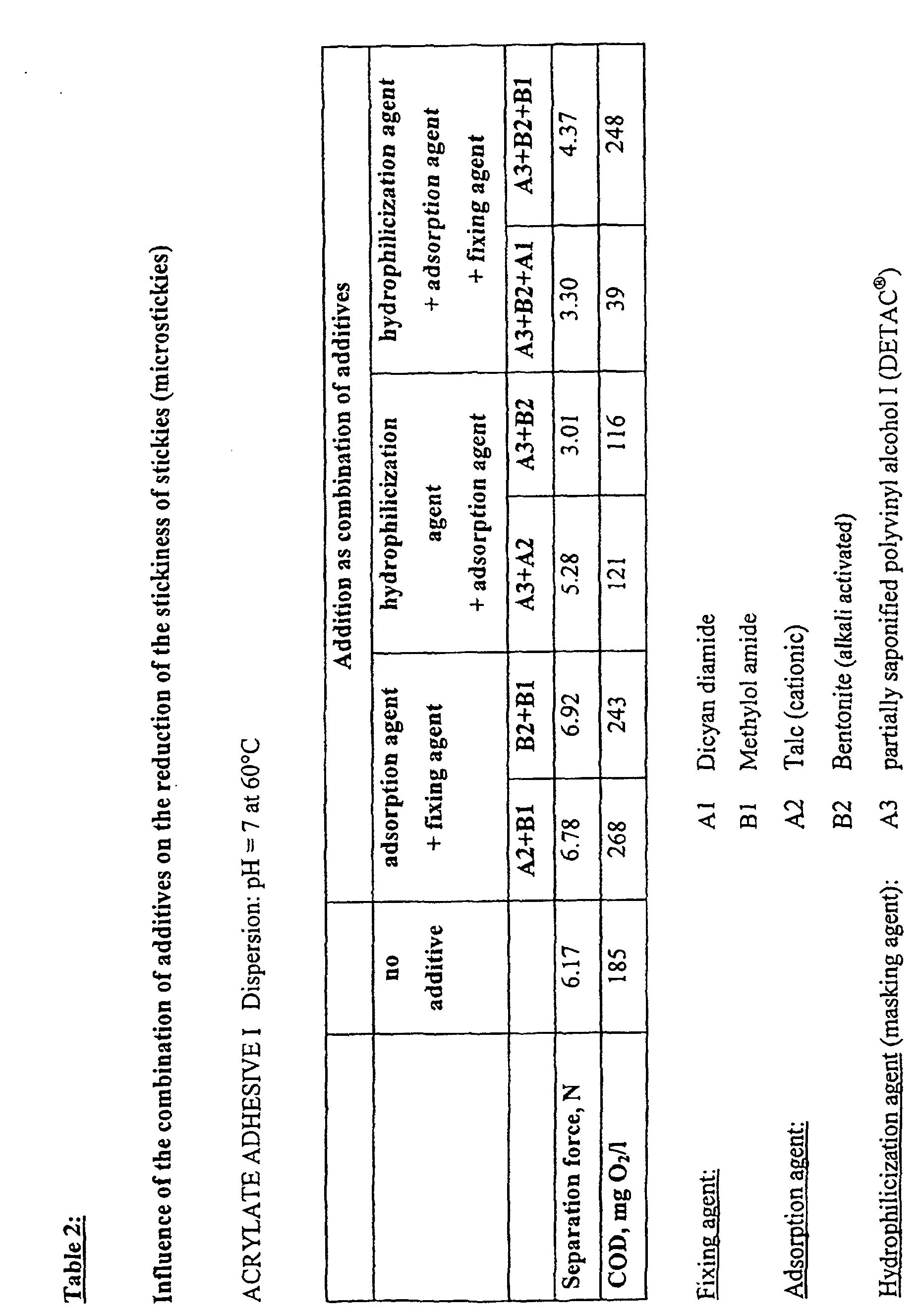

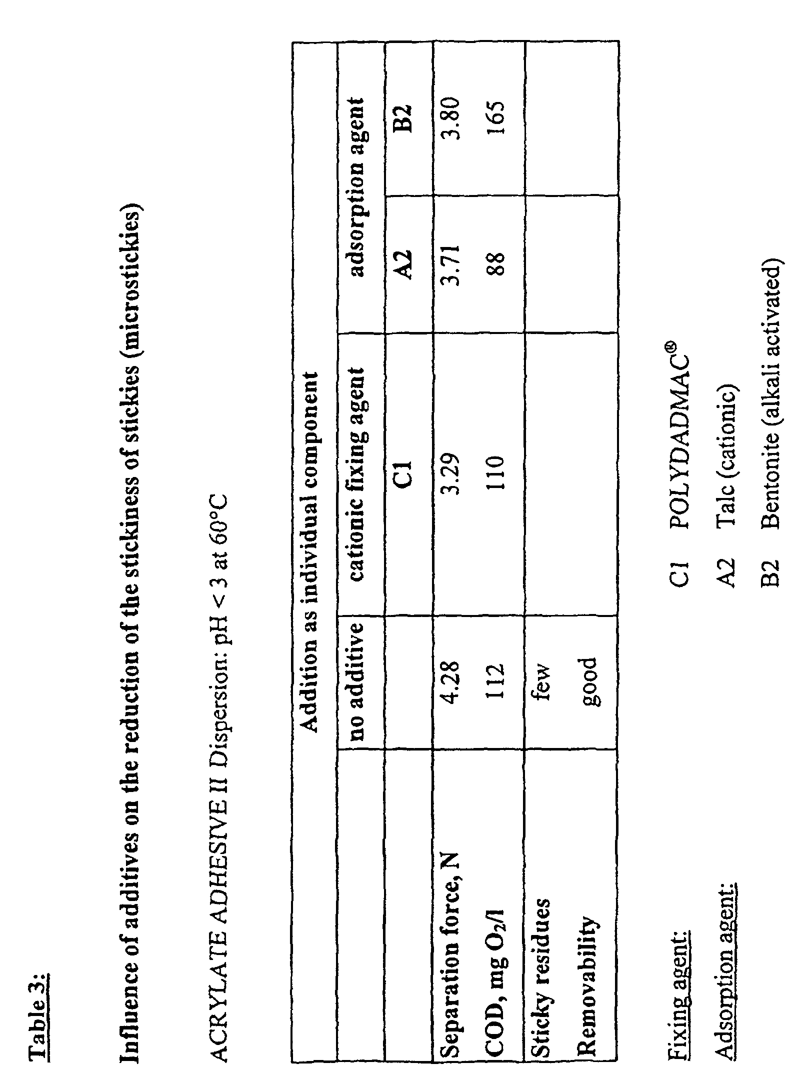

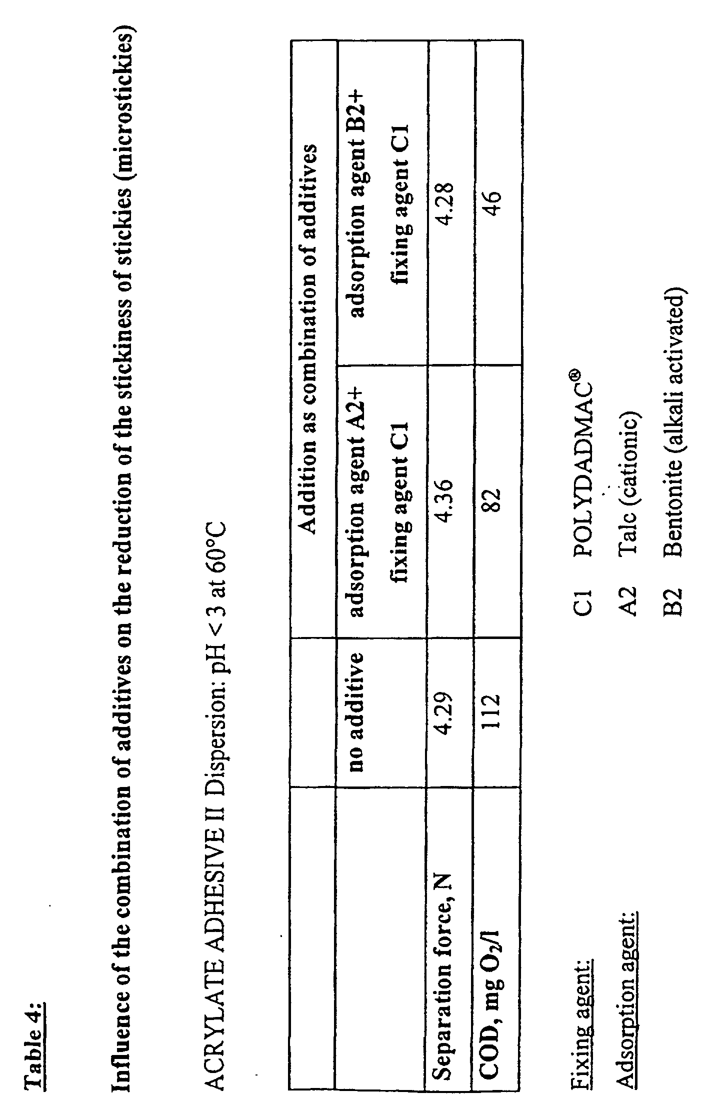

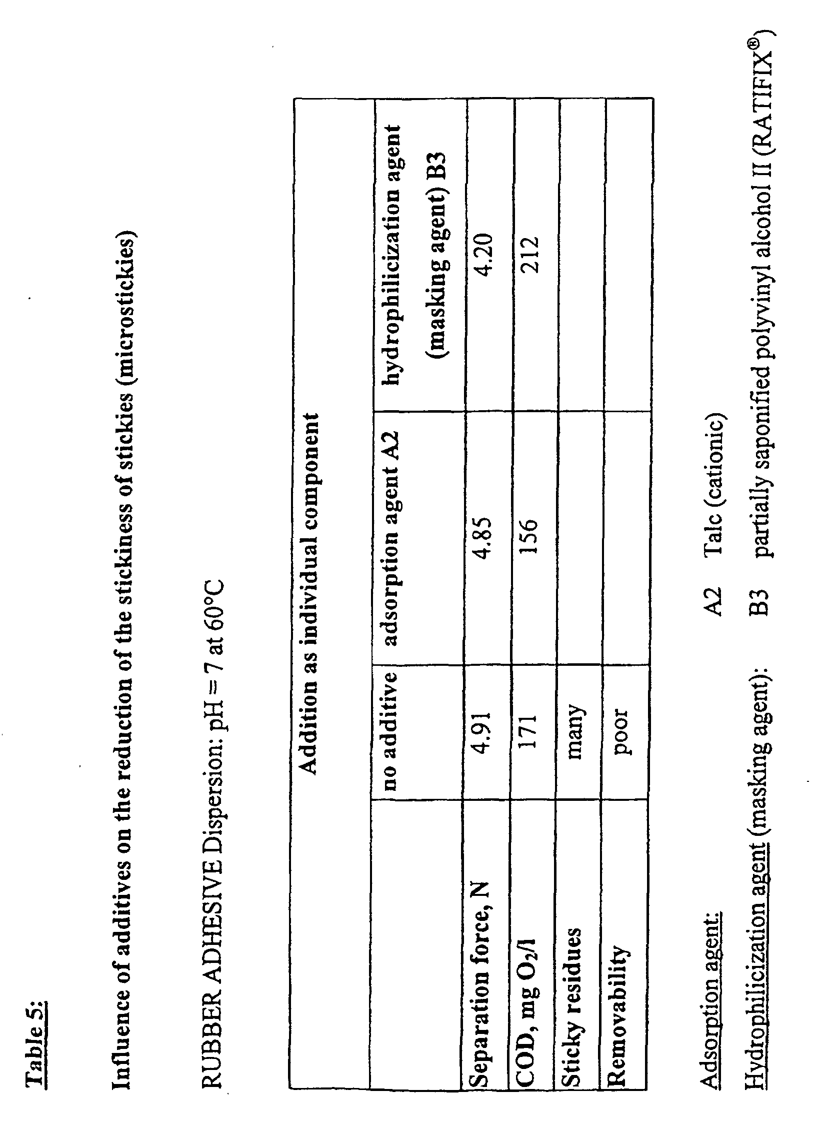

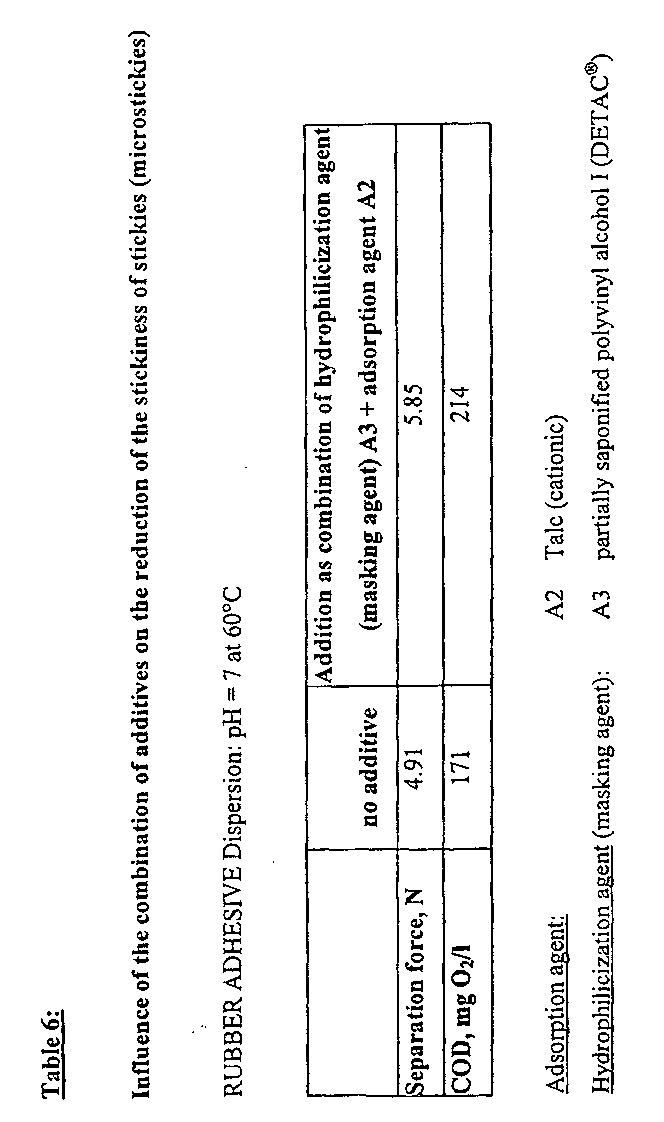

## Claims

1. Process for reducing sticky contaminants with a finely divided composition (microstickies) in the preparation of stock systems containing waste paper and of coated broke, **characterized in that**, after mechanical preparation has been carried out and coarse sticky constituents (macrostickies) have been separated, the stock system has added to it at least one water-soluble organic polyvinyl alcohol or a mixture of various water-soluble organic polyvinyl alcohols, and at least one bentonite or a mixture of different bentonites.

2. Process according to Claim 1, **characterized in that** the organic polyvinyl alcohols used are water-soluble polymers with proportions of vinyl alcohol or a copolymer of vinyl alcohol and vinyl acetate, which contain hydrophobic groups and are hydrolyzed to more than 70% by weight, being used after the mechanical preparation in proportions from 0.05 to 2% by weight, in particular from 0.1 to 1% by weight, based on fibrous material, in combination with bentonites with a high specific surface, preferably alkali modified bentonites, in proportions from 1 to 10% by weight, based on fibrous material.

3. Process according to Claim 1 or Claim 2, **characterized in that** the organic polyvinyl alcohols used have a molecular weight from 1 000 to 250 000, preferably 9 000 to 150 000.

4. Process according to one of Claims 1-3, **characterized in that** the prepared stock mixture has added to it cationic fixing agents in proportions from 0.05 to 1% by weight, based on fibrous material.

5. Process according to one of Claims 1-4, **characterized in that** further chemical additives and fillers are mixed in.

6. Paper which is produced by means of a secondary fibrous material mixture prepared in accordance with one of Claims 1-5.

## Patentansprüche

1. Verfahren zur Verminderung klebriger Verunreinigungen feinteiliger Beschaffenheit (Mikrostickies) bei der Aufbereitung von altpapierhaltigen Stoffsystemen und von gestrichenem Ausschuss, **dadurch gekennzeichnet, dass** nach erfolgter mechanischer Aufbereitung und Trennung grober klebriger Bestandteile (Makrostickies) dem Stoffsystem mindestens ein wasserlöslicher organischer Polyvinylalkohol oder ein Gemisch von verschiedenen wasserlöslichen organischen Polyvinylalkoholen sowie mindestens ein Bentonit oder ein Gemisch von unterschiedlichen Bentoniten zugesetzt werden.

2. Verfahren nach Anspruch 1, **dadurch gekennzeichnet, dass** als organische Polyvinylalkohole wasserlösliche Polymere mit Anteilen von Vinylalkohol bzw. einem Copolymer von Vinylalkohol und Vinylacetat, die hydrophobe Gruppen enthalten sowie einen Hydrolysierungsgrad über 70 Gew.-% aufweisen, nach der mechanischen Aufbereitung in Anteilen von 0,05 bis 2 Gew.-%, insbesondere von 0,1 bis 1 Gew.-% bezogen auf Faserstoff, in Kombination mit Bentoniten hoher spezifischer Oberfläche, vorzugsweise alkalisch modifizierte Bentonite, in Anteilen von 1 bis 10 Gew. %, bezogen auf Faserstoff, eingesetzt werden.

3. Verfahren nach Anspruch 1 oder Anspruch 2, **dadurch gekennzeichnet, dass** die eingesetzten organischen Polyvinylalkohole ein Molekulargewicht von 1000 bis 250000, bevorzugt 9000 bis 150000 besitzen.

4. Verfahren nach einem der Ansprüche 1 - 3, **dadurch gekennzeichnet, dass** dem aufbereiteten Stoffgemisch kationische Fixiermittel in Anteilen von 0,05 bis 1 Gew. % bezogen auf Faserstoff zugegeben werden.

5. Verfahren nach einem der Ansprüche 1 - 4, **dadurch gekennzeichnet, dass** weitere chemische Zusatzstoffe und Füllstoffe zugemischt werden.

6. Papier, hergestellt mit einem gemäss einem der Ansprüche 1 - 5 wiederaufbereiteten Faserstoffgemisch.

## Revendications

1. Procédé permettant de réduire des contaminants collants de composition finement divisée (micromatières collantes) dans la préparation de systèmes de pâte contenant des vieux papiers et des cassés de fabrication couchés, **caractérisé en ce que**, après avoir mis en oeuvre la préparation mécanique et, si nécessaire, avoir séparé les constituants collants grossiers (macromatières collantes), on ajoute au système de pâte au moins un poly(alcool vinylique) organique soluble dans l'eau ou un mélange de différents poly(alcools vinyliques) organiques solubles dans l'eau, et au moins une bentonite ou un mélange de différentes bentonites.

2. Procédé selon la revendication 1, **caractérisé en ce que** les poly(alcools vinyliques) organiques utilisés sont des polymères solubles dans l'eau contenant des proportions d'alcool vinylique ou d'un copolymère d'alcool vinylique et d'acétate de vinyle, qui contiennent des groupes hydrophobes et qui ne sont pas hydrolysés à plus de 70% en poids, que l'on utilise après la préparation mécanique dans des proportions de 0,05 à 2% en poids, en particulier de 0,1 à 1% en poids, par rapport au matériau fibreux, en combinaison avec des bentonites ayant une surface spécifique élevée, de préférence des bentonites modifiées par des alcalis, en proportions de 1 à 10% en poids, par rapport au matériau fibreux.

3. Procédé selon la revendication 1 ou la revendication 2, **caractérisé en ce que** les poly(alcools vinyliques) organiques utilisés ont une masse moléculaire de 1 000 à 250 000, de préférence de 9 000 à 150 000.

4. Procédé selon l'une des revendications 1-3, **caractérisé en ce qu'**on ajoute au mélange de pâte préparé des fixateurs cationiques dans des proportions de 0,05 à 1% en poids, par rapport au matériau fibreux.

5. Procédé selon l'une des revendications 1-4, **caractérisé en ce qu'**on y incorpore d'autres additifs chimiques et charges.

6. Papier produit au moyen d'un mélange de matériau fibreux secondaire préparé selon l'une des revendications 1-5.
